# EUROPEAN PATENT APPLICATION

(11) **EP 2 169 623 A1**
(43) Date of publication of application: **31.03.2010**
(21) Application number: 09168415.9
(22) Date of filing: 21.08.2009
(51) Int. Cl.: G06T 11/40

(54) **Semiconductor device, graphics controller, and information processing method**

(30) Priority: 29.09.2008 JP 2008250874
(71) Applicant: Fujitsu Microelectronics Limited, Tokyo 163-0722 (JP)
(72) Inventor: Nishi, Hidefumi, Shinjuku-ku, Tokyo 163-0722 (JP)
(74) Representative: Stebbing, Timothy Charles

(57) **Abstract**

A semiconductor device includes a data acquisition unit (31) which acquires first graphic data including a first drawing position in a drawing region, and acquires second graphic data including a second drawing position different from the first drawing position in the drawing region located later than the first graphic data, a detector (32) which detects positions in a first direction in the drawing region of the first drawing position and the second drawing position, and a controller (38) which causes drawing information at the first drawing position and drawing information at the second drawing position to be continuously stored in a memory when the positions of the first drawing position and the second drawing position in the first direction are similar.

## Description

This application is based upon and claims the benefit of priority of the prior Japanese Patent Application No. 2008-250874, filed on September 29, 2008.

The present application relates to a semiconductor device, a graphics controller, and an information processing method.

Generally, in three-dimensional graphics, a graphics engine calculates a two-dimensional image to be seen when a three-dimensional object given as three-dimensional data is viewed from a predetermined view point, and writes data for each of the pixels into a memory to generate two-dimensional image data. Then, a display engine reads the two-dimensional image data stored in the memory as drawing data, and displays the read drawing data on a display. Here, the drawing data stored in the memory generally indicates the color and the brightness of a pixel expressed by a numerical value. For example, when data of one pixel is 32 bits, the first 8 bits indicate the intensity of red (R), the following 8 bits indicate the intensity of green (G), the following 8 bits indicate the intensity of blue (B), and the last 8 bits indicate an alpha value. Here, the alpha value is a weight used to overlap a newly calculated write image on the original image read from the memory when a translucent image or the like is drawn.

A DRAM generally used in the above graphics drawing device is characterized by a high speed access to contiguous memory addresses and a low speed access to discontinuous (non-contiguous) memory addresses. The DRAM may be managed in units of pages. The accesses within the same page may be performed at high speeds, but an access to a different page generates a page miss. When a page miss occurs, a data read process is requested to activate a new word line to read data from a memory cell to a sense amplifier. After this read process is completed within the DRAM, a new page of data may be read out to outside the memory.

In general, a pixel corresponding to the coordinate (X, Y)=(0, 0) at a corner of a drawing plane is allocated to the starting address in the memory region and each pixel lined up in a direction of increasing X coordinate values on the similar Y coordinate is allocated to a successive address in the memory. When the X coordinate values increase to reach the end (X = Xmax) of the drawing plane, the X coordinate value returns to a value of 0, and the Y coordinate value changes by one (it depends on the specification of the drawing device whether to increase or to decrease Y coordinate values). At this time, a pixel (Xmax, Yn) and a pixel (0, Yn+1) are arranged so as to be adjacent addresses in the memory region.

This address layout has advantages in that the address in memory may be obtained from the coordinate of a pixel to draw by a simple calculation, and the display device may efficiently access the memory for display simply by reading data from successive addresses in memory. Note that the display device generally scans sequentially from the upper left to the lower right of the screen. The above address layout has a disadvantage including the fact that drawing data is drawn for each triangle as a set of triangles, and thus a large number of memory accesses occur to discontinuous (non-contiguous) addresses at drawing, thus greatly reducing memory access efficiency.

According to an aspect of the invention, a semiconductor device includes a data acquisition unit which acquires first graphic data including a first drawing position in a drawing region, and acquires second graphic data including a second drawing position different from the first drawing position in the drawing region located later than the first graphic data, a detector which detects positions in a first direction in the drawing region of the first drawing position and the second drawing position, and a controller which causes drawing information at the first drawing position and drawing information at the second drawing position to be continuously stored in a memory (e.g., stored at successive locations in the memory) when the positions of the first drawing position and the second drawing position in the first direction are similar (or substantially similar).

The advantages of the invention will be realized and attained by means of the elements and combinations particularly pointed out in the claims.

It is to be understood that both the foregoing general description and the following detailed description are exemplary and explanatory and are not restrictive of the invention, as claimed. Additional aspects and/or advantages will be set forth in part in the description which follows and, in part, will be apparent from the description, or may be learned by practice of the invention.

These and/or other aspects and advantages will become apparent and more readily appreciated from the following description of the embodiments, taken in conjunction with the accompanying drawings of which:
FIG. 1 illustrates an example of a graphics drawing system in accordance with an aspect of an embodiment;
FIG. 2 illustrates an example of a graphics engine including such as shown in FIG. 1 which is a graphics drawing device;
FIG. 3 illustrates an example of triangle data generated by a triangle setup unit including such as shown in FIG. 2;
FIG. 4 illustrates an example of a triangle sorter unit including such as shown in FIG. 2 and a triangle data buffer in FIG. 2;
FIG. 5 illustrates an example of an YDDA processing unit including such as shown in FIG. 2 and a triangle data buffer in FIG. 2;
FIG. 6 illustrates an example of span data processed by a graphics engine including such as shown in FIG. 1;
FIG. 7 illustrates the span data separation unit including such as shown in FIG. 2;
FIG. 8 illustrates an efficient memory access to triangle span data;
FIG. 9A illustrates how a page miss occurs at memory access;
FIG. 9B illustrates memory access a series of span(s); and
FIG. 10 illustrates an YDDA process by the YDDA processing unit including such as shown in FIG. 2 and an XDDA process by the XDDA processing unit in FIG. 2.

Reference will now be made in detail to the embodiments, examples of which are illustrated in the accompanying drawings, wherein like reference numerals refer to the like elements throughout. The embodiments are described below to explain the present invention by referring to the figures.

Hereinafter, embodiment(s) of the present invention will be described in detail with reference to accompanying drawings.

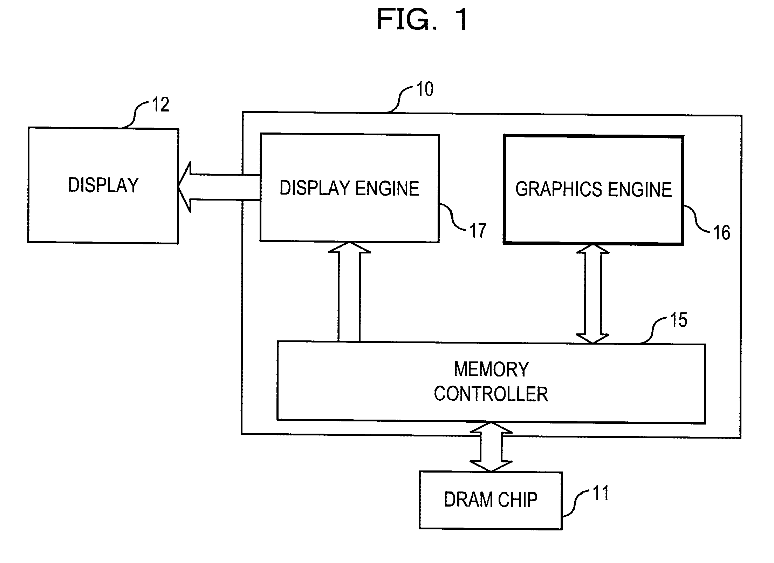

FIG. 1 illustrates an exemplary configuration of a graphics drawing system. The graphics drawing system illustrated in FIG. 1 includes a graphics controller 10, a DRAM chip 11, and a display 12. The graphics controller 10 includes a memory controller 15, a graphics engine 16 which is a graphics drawing device, and a display engine 17 which is a display device. The graphics engine 16 uses three-dimensional data of a three-dimensional object stored in the DRAM chip 11 to calculate a two-dimensional image to be seen when the three-dimensional object is viewed from a predetermined view point and to generate data for each of the pixel as two-dimensional image data. The drawing data generated by the graphics engine 16 is written into the DRAM chip 11 via the memory controller 15. The display engine 17 reads drawing data from the DRAM chip 11 via the memory controller 15 and displays the drawing data on a display screen of the display 12.

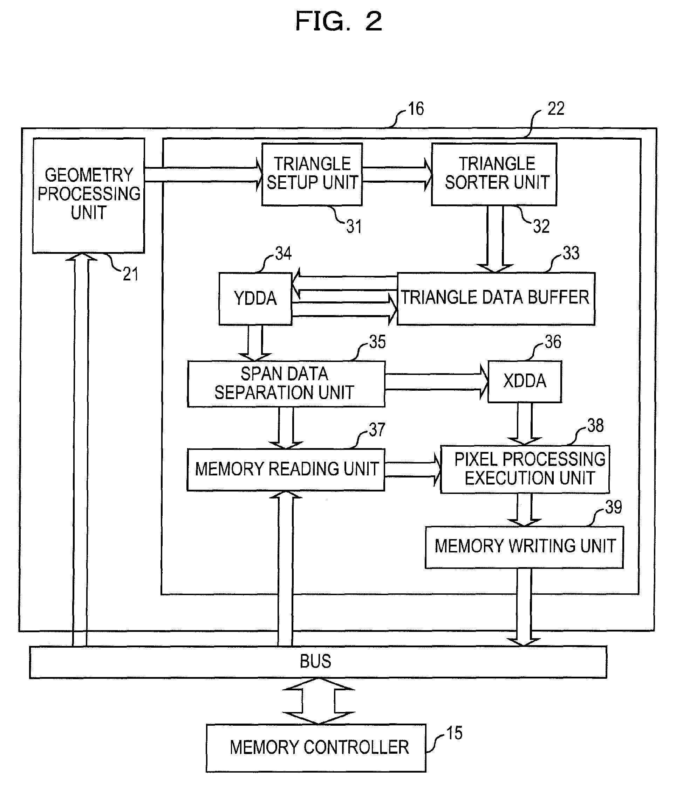

FIG. 2 illustrates an exemplary configuration of the graphics engine 16 which is a graphics drawing device. The graphics engine 16 includes a geometry processing unit 21 and a raster processing unit 22. The geometry processing unit 21 uses the three-dimensional data of the three-dimensional object read from the memory controller 15 to perform a geometric calculation process such as expansion and rotation according to a position and posture of an object. In general, a three-dimensional object is expressed as a set of a large number of polygons. The geometry processing unit 21 performs not only a coordinate transformation in units of polygons as the geometric calculation process but also a light source calculation. In this case, a triangle is generally used as the simplest polygon. The geometry processing unit 21 uses the geometric calculation process, the light source calculation and the like to calculate data of a plurality of triangles constituting a two-dimensional image of the object viewed from a desired view point, and then supplies the data of the plurality of triangles to the raster processing unit 22.

The raster processing unit 22 performs a rasterization process of filling each pixel of each surface constituting the object to generate two-dimensional drawing data. The rasterization process uses an image parameter obtained for each vertex of each triangle to obtain an image parameter of each pixel included in the triangle by interpolation. The image parameter includes the intensity of each RGB color, a Z value indicating a distance in the depth direction, a texture coordinate value for texture display, an alpha value for alpha blending, and the like.

The raster processing unit 22 includes a triangle setup unit 31, a triangle sorter unit 32, a triangle data buffer 33, a YDDA (Y-Direction Digital Differential Analysis) processing unit 34, a span data separation unit 35, an XDDA (X-Direction Digital Differential Analysis) processing unit 36, a memory reading unit 37, a pixel processing execution unit 38, and a memory writing unit 39. The triangle setup unit 31 sequentially receives a coordinate value of each vertex of each triangle and each image parameter value at each vertex thereof from the geometry processing unit 21. The triangle setup unit 31 uses the received coordinate value of each vertex of each triangle and each image parameter value at each vertex thereof to generate triangle data suitable for rasterization process.

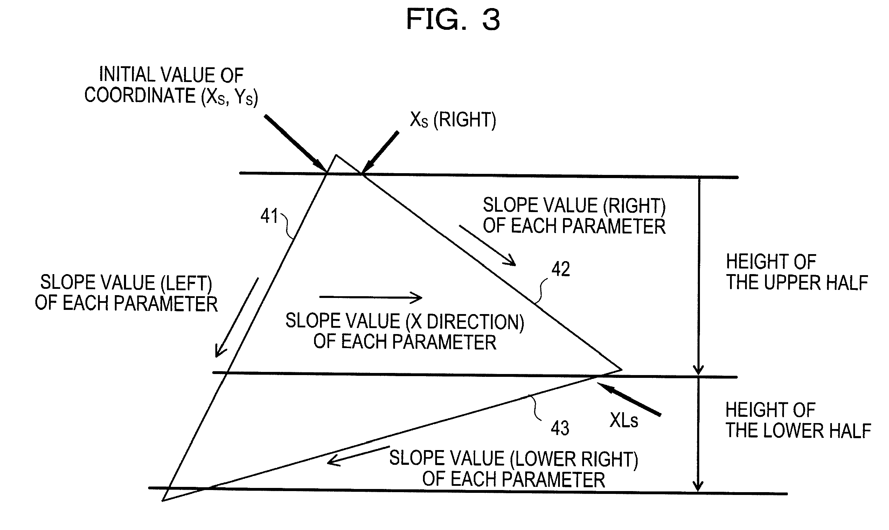

FIG. 3 illustrates an example of triangle data generated including by the triangle setup unit 31. As illustrated in FIG. 3, the triangle data generated by the triangle setup unit 31 includes the coordinate (Xs, Ys) at the vertex of the uppermost portion of the triangle as the initial coordinate value. Further, the triangle data includes the value of each image parameter in this coordinate (Xs, Ys) as the initial image parameter value. Still further, the triangle data includes an X coordinate along a left side 41 and a slope (amount of change) of each image parameter, an X coordinate along a right side 42 and a slope (amount of change) of each image parameter, and an X coordinate along a lower right side 43 and a slope (amount of change) of each image parameter. Yet further, the triangle data includes a slope (amount of change) of each image parameter along each span. Here, the span refers to a column of pixels along the raster scanning direction (X direction) between the left edge and the right edge. Yet further, the triangle data includes data representing height of the upper half of the triangle and data representing height of the lower half of the triangle. Although specific exemplary data representing span(s) is provided herein, no limitation is intended thereby and the present invention may include any set or interval covering various values of graphic data.

In FIG. 3, each vertex of the triangle is not aligned to a straight line in the horizontal direction indicating the pixel position. This is because the vertex coordinate of the triangle which is originally expressed by a real number does not completely match the coordinate of a pixel which is arranged in matrix. Moreover, in FIG. 3, an example of the triangle having one side at left and two sides at right is illustrated, however triangle data may also be generated when the triangle has two sides at left and one side at right.

Now, with reference to FIG. 2 again, the triangle sorter unit 32 sorts data of a predetermined number of triangles in an order of a size of Y coordinate values (Ys) of the triangle data generated by the triangle setup unit 31. For example, a sort process of rearranging the order thereof in such a manner is performed on the data of eight triangles. For example, assume that the geometry processing unit 21 outputs data of an n number of triangles in sequence. In this case, the triangle setup unit 31 sequentially outputs the first to the nth triangle data in the order as they are received from the geometry processing unit 21. First, the triangle sorter unit 32 sorts the first to eighth pieces of triangle data to rearrange the data of eight triangles in the order of the size of the Y coordinate values (Ys) of the triangle data. Then, the triangle sorter unit 32 sorts the ninth to sixteenth triangle data to rearrange the data of eight triangles in the order of the size of the Y coordinate values (Ys) of the triangle data. Further, the triangle sorter unit 32 sorts the seventeenth to twenty fourth pieces of triangle data to rearrange the data of eight triangles in the order of the size of the Y coordinate values (Ys) of the triangle data. Afterward, the triangle sorter unit 32 sorts in a similar manner as above. In this manner, the triangle sorter unit 32 rearranges the triangle data every predetermined number of triangles (eight in the above example) according to the Y coordinate values. This rearrangement is performed when data is stored in the triangle data buffer 33. However, the present invention is not limited to any particular number of triangle(s) based on which sorting is implemented.

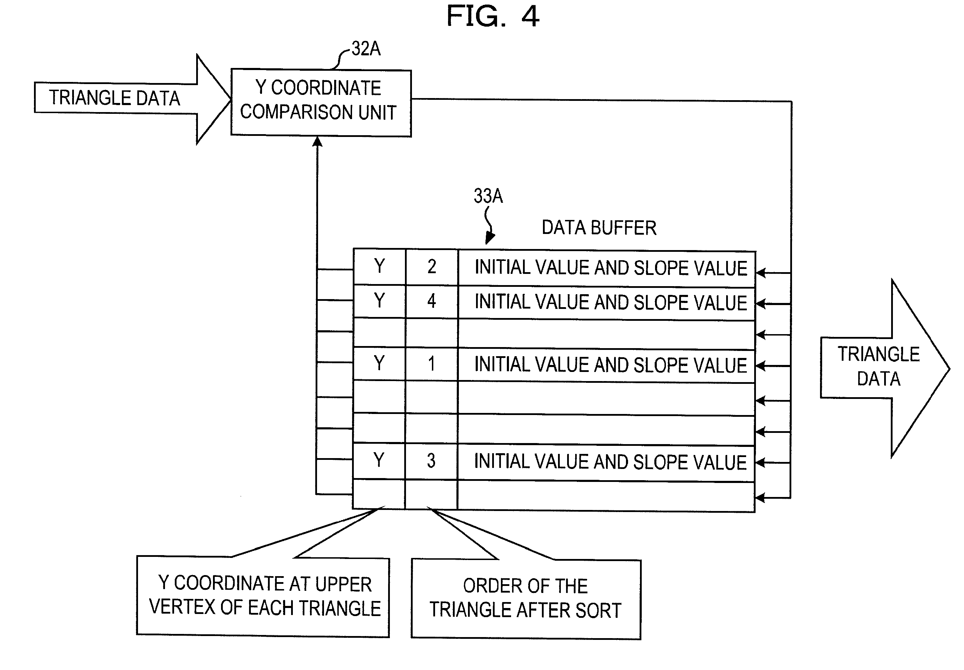

FIG. 4 illustrates an exemplary configuration of the triangle sorter unit 32 and the triangle data buffer 33. In this exemplary configuration, the triangle sorter unit 32 includes a Y coordinate comparison unit 32A. Moreover, the triangle data buffer 33 includes a data buffer 33A. The Y coordinate comparison unit 32A stores the triangle data (triangle data in the figure) supplied from the triangle setup unit 31 in the data buffer 33A for each triangle. Here, the triangle data includes an initial value and a slope value about the coordinate, the color, the texture coordinate value, and the like. In the example illustrated in FIG. 4, the data buffer 33A is configured so as to store data of eight triangles.

When data of a triangle is newly received from the triangle setup unit 31, the Y coordinate comparison unit 32A compares the Y coordinate (Ys in FIG. 3) of the triangle data with the Y coordinates of all the triangle data preliminarily stored in the data buffer 33A. According to the comparison results, the Y coordinate comparison unit 32A assigns a sequence number to data of each triangle in ascending order of the Y coordinate. At this time, the Y coordinate comparison unit 32A rewrites the sequence number of each triangle data already stored in the data buffer 33A, as needed, for example. When data of a triangle is newly received, the Y coordinate comparison unit 32A stores the triangle data together with corresponding sequence number in an empty place of the data buffer 33A. The example illustrated in FIG. 4 illustrates a state in which data of four triangles is stored in the data buffer 33A. Starting in this state, the above process is repeatedly performed on the data of four triangles to be sequentially received later. Finally, data of eight triangles are stored in the data buffer 33A. When the data of predetermined number (eight in this example) of triangles has been stored, the data buffer 33A issues a notification signal to the YDDA processing unit 34 (see FIG. 2).

The YDDA processing unit 34 reads the triangle data from the data buffer 33A in ascending order of the sequence number and newly stores the triangle data in the triangle data buffer 33 in the order of the above sequence number. At this time, the triangle data buffer 33 has a buffer region for data of eight triangles separately from the data buffer 33A, and the triangle data may be written in this buffer region in the order of the sequence number.

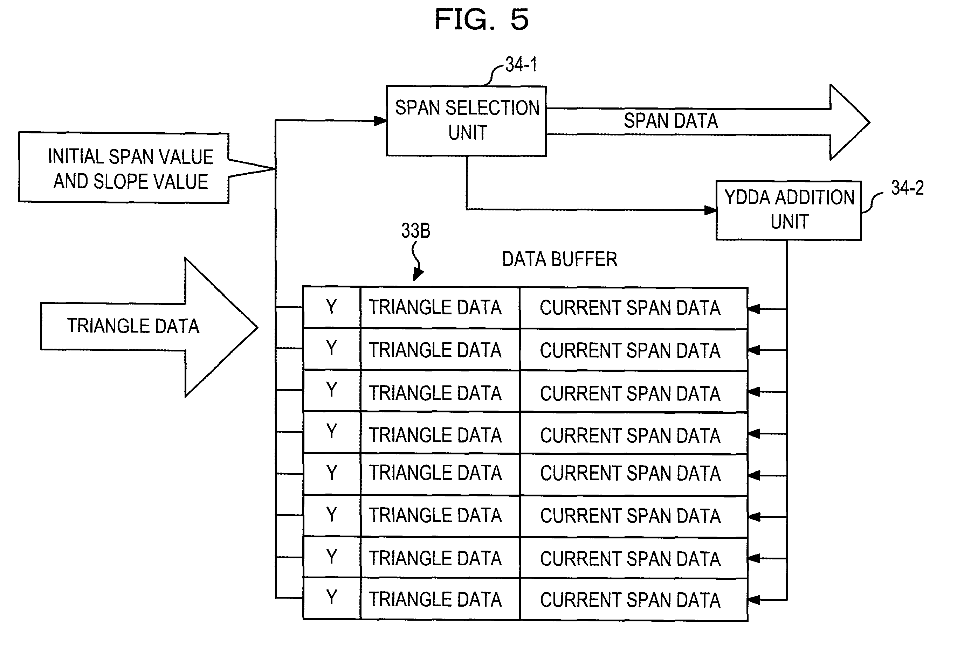

FIG. 5 illustrates an exemplary configuration of the YDDA processing unit 34 and the triangle data buffer 33. In this exemplary configuration, the YDDA processing unit 34 includes a span selection unit 34-1 and a YDDA addition unit 34-2. Moreover, the triangle data buffer 33 includes a data buffer 33B. The data buffer 33B stores data of eight triangles read from the data buffer 33A starting at the top in ascending order of the sequence number. At this time, as illustrated in FIG. 5, data about a span at the uppermost portion is separated from the other triangle data and is stored as current span data. This current span data includes a starting pixel coordinate of a current span (a span at the uppermost portion in the initial state), an ending pixel coordinate, and an initial value and a slope value (amount of change) of each image parameter.

The span selection unit 34-1 selects a current span of a triangle with the smallest Y coordinate (i.e. an entry at the uppermost portion of the data buffer 33B) as the drawing object and supplies the span data of the selected current span to the span data separation unit 35 (see FIG. 2). Further, the span selection unit 34-1 searches the data buffer 33B for the current span having the similar Y coordinate value as the selected current span. When the current span having the similar Y coordinate value is found, the span selection unit 34-1 supplies the span data of the found current span to the span data separation unit 35 (see FIG. 2). The YDDA processing unit 34 supplies the span data of all the found current spans to the span data separation unit 35 (see FIG. 2). In this manner, when data of eight triangles is given as data stored in the data buffer 33B, the span selection unit 34-1 collectively outputs the data of spans having the similar Y coordinate value from the data of the spans of the eight triangles as a series of span data. Here, collectively outputting a series of span data refers to outputting a series of span data without inserting other span data therebetween.

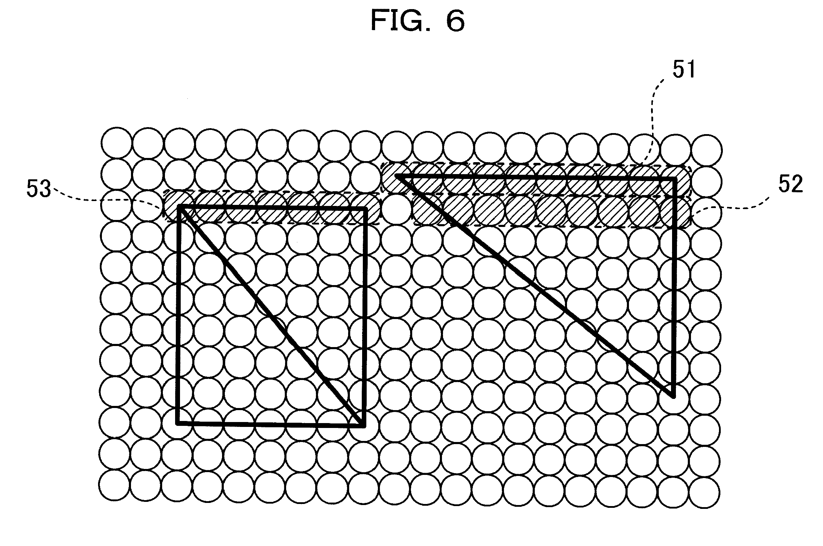

Note that if a current span having the similar Y coordinate value as the selected current span is not found, the series of span data outputted by the span selection unit 34-1 includes only the span data of the selected current span. FIG. 6 illustrates an example of span data. FIG. 6 illustrates an example of only three triangles. Circles arranged in matrix illustrate a layout of pixels. In this example, assume that a span 51 is the selected current span. Since there is no span having the similar Y coordinate value as the selected current span, the span selection unit 34-1 outputs only the span data of the span 51 as a series of span data. Next, assume that a span 52 is selected as the current span. Since a span 53 has the similar Y coordinate value as the span 52, the span selection unit 34-1 outputs the span data of the span 52 and the span data of the span 53 as a series of span data.

Now, with reference to FIG. 5 again, the YDDA addition unit 34-2 performs a Y-Direction Digital Differential Analysis (YDDA). More specifically, the YDDA addition unit 34-2 adds an amount of change or adjustment in the Y direction to the data of a span to generate data of the next span. That is, the amount of change or adjustment of the X coordinate in the Y direction included in the triangle data is added to a starting pixel coordinate and an ending pixel coordinate of the current span respectively to obtain the starting pixel coordinate and the ending pixel coordinate of the next span (a span with its Y coordinate value lowered by one pixel). Moreover, the amount of change or adjustment of each image parameter in the Y direction included in the triangle data is added to the initial value of each image parameter of the current span respectively to obtain the initial value of each image parameter of the next span. The data of the next span obtained by the YDDA addition unit 34-2 is written in the data buffer 33B as a new piece of current span data. An update of the current span data by the YDDA addition unit 34-2 is performed on each current span data sent from the span selection unit 34-1 to the span data separation unit 35.

When the span selection unit 34-1 supplies the data of all the found current spans to the span data separation unit 35, the span selection unit 34-1 returns to an entry of the data buffer 33B where the current span was selected for the first time. At this time, the current span data has already been updated to the data of a span with respect to the next Y coordinate value. Therefore, the span selection unit 34-1 selects the next current span as the drawing object and supplies the span data of the selected current span to the span data separation unit 35. Subsequently, the similar process as above is repeated.

As described above, when the span selection unit 34-1 searches the data buffer 33B for the current span having the similar Y coordinate value as the selected current span, the triangle data is arranged in the order of the Y coordinate and thus the search may be performed efficiently. More specifically, when a comparison is made with the Y coordinate value of the selected current span, assume that the Y coordinate value of the triangle data at the nth entry from the top is small and the Y coordinate value of the triangle data at the n+1th entry from the top is large. In this case, the triangle data at the n+1th and subsequent entries may not include a span having the similar Y coordinate value as the selected current span. Therefore, the n+1th and subsequent entries may be removed from the search object. For this reason, the aforementioned sort processing by the triangle sorter unit 32 may provide an efficient search processing.

Now, with reference to FIG. 2 again, the series of span data outputted from the YDDA processing unit 34 is supplied to the span data separation unit 35. The span data separation unit 35 uses the series of span data to calculate a memory address for reading the memory and supplies the address to the memory reading unit 37. Further, the span data separation unit 35 supplies the series of span data to the XDDA processing unit 36 to cause the XDDA processing unit 36 to execute the X-Direction Digital Differential Analysis (XDDA).

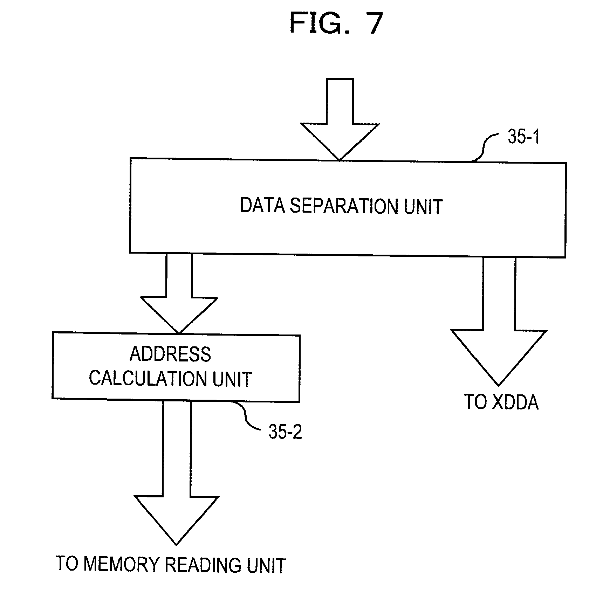

FIG. 7 illustrates an exemplary configuration of the span data separation unit 35. In FIG. 7, the span data separation unit 35 includes a data separation unit 35-1 and an address calculation unit 35-2. The data separation unit 35-1 separates coordinate data related to the X coordinate and the Y coordinate from a series of span data supplied from the YDDA processing unit 34 and supplies the separated coordinate data to the address calculation unit 35-2. The address calculation unit 35-2 uses the supplied coordinate data to obtain the address of the memory storing each pixel data corresponding to the series of span data. At this time, the address calculation unit 35-2 calculates the address of the memory so that the address of the memory for storing each pixel along the raster scanning direction may be a continuous memory address (i.e. contiguous or successive memory address to that last written). In addition, at this time, regarding the continuous pixels of the series of span data, the address calculation unit 35-2 calculates the starting memory address and the access length thereof.

Now, with reference to FIG. 2 again, the memory reading unit 37 accesses the memory address supplied from the span data separation unit 35 and reads image data from the DRAM chip 11 (see FIG. 1). At this time, a memory access is collectively performed on each pixel of the spans having the similar Y coordinate, enabling efficient data reading without generating a page miss. The pixel data read from the memory is combined with the pixel data of each span generated by the XDDA processing unit 36 as described in detail below. At this time, for example, a Z value is used to perform a hidden line processing or an alpha value is used to perform alpha blending.

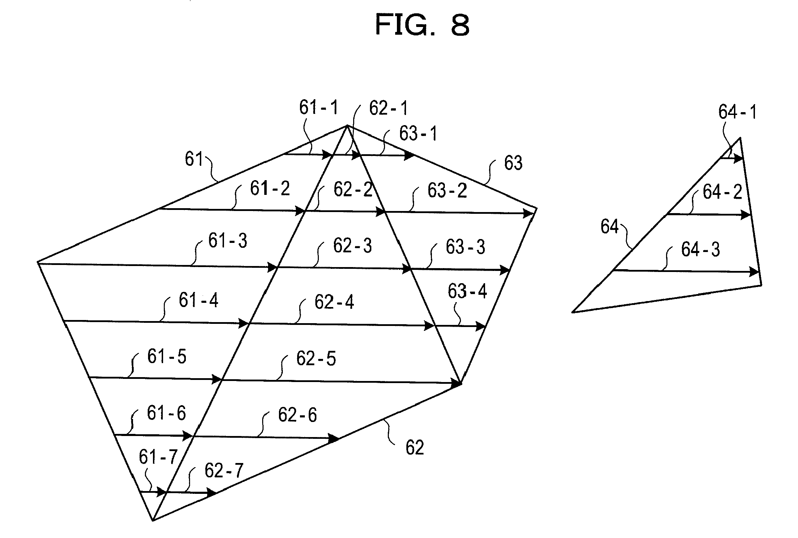

FIG. 8 is a drawing for explaining an efficient memory access to triangle span data. In FIG. 8, a triangle 61 includes seven spans 61-1 to 61-7. Likewise, a triangle 62 includes seven spans 62-1 to 62-7. Further, a triangle 63 includes four spans 63-1 to 63-4, and a triangle 64 includes three spans 64-1 to 64-3. Conventionally, a general graphics drawing device performs a drawing process for each triangle. For example, first, seven spans 61-1 to 61-7 are drawn sequentially to complete the triangle 61, and then, the process moves to the triangle 62, where seven spans 62-1 to 62-7 of the triangle 62 are drawn sequentially. In this manner, the triangles 61 to 64 are drawn sequentially. For this reason, a memory access is performed for each triangle when drawing data is read from the memory and when drawing data is written in the memory. More specifically, a memory access is performed sequentially for each pixel data of the seven spans 61-1 to 61-7 of the triangle 61, and then, a memory access is performed sequentially for each pixel data of the seven spans 62-1 to 62-7 of the triangle 62. At this time, since each span has a different Y coordinate, a page miss occurs at memory access each time the process moves to the next span.

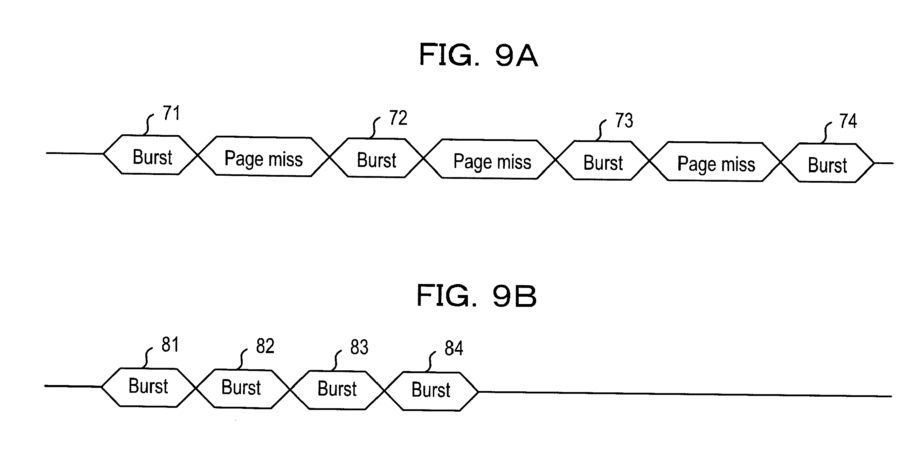

FIG. 9 illustrates how a page miss occurs at memory access. In the case of a typical memory access illustrated in FIG. 9A, for example, a burst access 71 is performed on the span 61-1 of the triangle 61, and then, a burst access 72 is performed on the span 61-2 of triangle 61. Subsequently, a burst access 73 is performed on the span 61-3 of the triangle 61, and then, a burst access 74 is performed on the span 61-4 of the triangle 61 in sequence. In this case, as illustrated in FIG. 9A, when a burst access is performed and then an attempt is made to perform a next burst access, a page miss occurs since the Y coordinate moves and the memory word address moves accordingly. Therefore, between each burst accesses 71 to 74, there may be needed a new data reading process caused by the page miss.

The graphics engine 16 illustrated in FIG. 2 combines the data of a span having the similar Y coordinate value of data of a plurality of triangle spans into a series of span data and then executes a drawing process on a collection of the series of span data. More specifically, in the example of FIG. 8, the spans 61-1, 62-1, 63-1, and 64-1 at the uppermost portions of the four triangles 61, 62, 63, and 64 are first drawn sequentially. Then, the respective second spans 61-2, 62-2, 63-2, and 64-2 of the four triangles 61, 62, 63, and 64 are drawn sequentially. In this manner, the spans having the similar Y coordinate are collectively drawn and the process moves to the next Y coordinate. For this reason, a memory access is performed for each Y coordinate when drawing data is read from the memory and when drawing data is written in the memory. The memory access to a series of spans having the similar Y coordinate does not cause a page miss even when the process moves from a span to a next span.

In the case of a memory access by the graphics engine 16 illustrated in FIG. 9B, for example, a burst access 81 is performed on the span 61-1 of the triangle 61, and then, a burst access 82 is performed on the span 62-1 of the triangle 62. Subsequently, a burst access 83 is performed on the span 63-1 of the triangle 63, and then, a burst access 84 is performed on the span 64-1 of the triangle 64 in sequence. In this case, as illustrated in FIG. 9B, when a next burst access following a burst access is executed, the access to the similar word address continues without moving the Y coordinate, and thus no page miss occurs. Therefore, between each burst accesses 81 to 84, a new data reading process caused by a page miss is not executed, thereby enabling an efficient, high-speed memory access.

It may be noted that the above description has been made such that the memory access to a series of span data is sequentially performed from left to right in the example of FIG. 8. More specifically, for example, the memory access is performed in the order of spans 61-1, 62-1, 63-1, and 64-1. However, this order may be arbitrary. For example, the memory access may be performed in the order of spans 61-2, 62-1, 63-4, and 64-3 or the like. Even in this case, the memory access is performed continuously on the similar Y coordinate (similar word address). Therefore, no page miss occurs, thereby enabling an efficient, high-speed memory access. Further, the above description has been made such that the memory access to each span is performed as a burst access for each span. However, a collection of a plurality of continuous spans may be read once in a burst access. More specifically, for example, the three spans 61-1, 62-1, and 63-1 continue in the X direction. Therefore, these three spans may be specified with a starting address and a burst length to execute data reading or writing once in a burst access. Note that here, the burst access is an access method by which a starting address and a burst length is specified for the memory so that each address is automatically generated in the memory so as to read or write data starting at the specified starting address and for the number of pieces specified by the burst length.

Now, with reference to FIG. 2 again, the pixel data corresponding to a series of span data read by the memory reading unit 37 is supplied to the pixel processing execution unit 38. On another front, the XDDA processing unit 36 uses data of each span included in the series of span data received from the span data separation unit 35 to perform an X-Direction Digital Differential Analysis (XDDA) for each span. More specifically, the XDDA processing unit 36 sequentially adds a slope value (amount of change) along the X direction of each image parameter to the initial value of the image parameter at the starting point of a span to generate a value of each pixel parameter at each pixel position on the span.

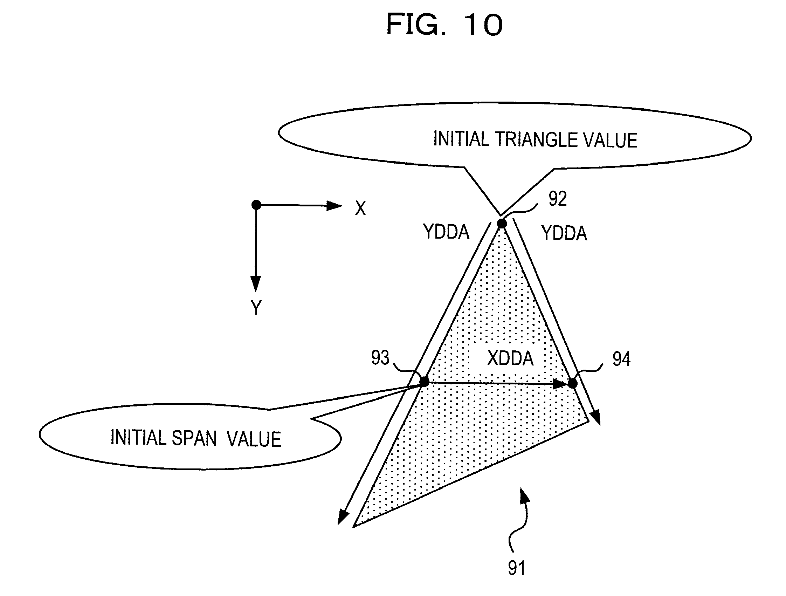

FIG. 10 is a drawing for explaining the YDDA process and the XDDA process. As illustrated in FIG. 10, an initial value of each image parameter is provided at the vertex 92 of the uppermost portion of the triangle 91. The slope value (amount of change) in the Y direction of each image parameter along the left edge is sequentially added to the initial value at the vertex 92 to obtain the value of each image parameter at each point along the left edge. Likewise, the slope value (amount of change) in the Y direction of each image parameter along the right edge is sequentially added to the initial value at the vertex 92 to obtain the value of each image parameter at each point along the right edge. The YDDA processing is a process of obtaining a value along the edge.

The YDDA processing provides the initial value of each image parameter at the starting point 93 of a focus span and the ending value of each image parameter at the ending point 94 of the focus span. The ending value and the starting value of each image parameter may be used to obtain the slope value (amount of change) of each image parameter in the X direction (raster scanning direction) on the span. The slope value (amount of change) in the X direction of each image parameter along the span is sequentially added to the initial value at the starting point 93 to obtain the value of each image parameter at each point along the span. The XDDA processing is a process of obtaining a value along the span.

The XDDA processing unit 36 illustrated in FIG. 2 performs the above XDDA process on each span included in the series of span data received from the span data separation unit 35. Thereby, the values (an intensity of each RGB color, a texture coordinate value, a Z value, an alpha value, and the like) of each pixel on each span included in a series of span data are obtained. With respect to each pixel on each span included in the series of span data, the pixel processing execution unit 38 combines the read data supplied from the memory reading unit 37 with data generated by the XDDA processing unit 36 to generate new pixel data. For example, the pixel processing execution unit 38 uses the Z value to perform the hidden line processing or uses the alpha value to perform the alpha blending, or the like.

The pixel processing execution unit 38 supplies the newly generated pixel data for each pixel on each span included in the series of span data as new drawing data to the memory writing unit 39. The memory writing unit 39 writes the new drawing data in the DRAM chip 11 (see FIG. 1) via the memory controller 15. The address to be written is the address generated by the address calculation unit 35-2 of the span data separation unit 35, and hence the original pixel data read by the memory reading unit 37 is overwritten by new pixel data. In the case of a write access by the memory writing unit 39, as explained with reference to FIGS. 8 and 9, the access is also performed continuously on the similar Y coordinate (similar word address), thereby enabling an efficient, high-speed memory access.

The above described embodiment(s) relates generally to image processing, and more particularly to drawing information processing of generating two-dimensional drawing data based on three-dimensional data.

According to one aspect of the above described embodiment(s), a graphics drawing device using a memory reducing efficiency at discontinuous access increases memory access efficiency at drawing processing and improves drawing performance.

According to one aspect of the above described embodiment(s), a memory access is performed collectively to spans having the similar Y coordinate, and thus a page miss occurs less frequently when the process moves from a span to a next span, thereby improving memory access efficiency.

It should be noted that when graphics information is calculated and is displayed on a display device, the display speed may be limited by the memory access speed rather than by the calculation speed. That is, the display speed may be influenced more often by the memory access speed than by the calculation speed. In such a case, as described above, increased memory access efficiency effectively improves the display speed.

It may be noted that the above description has been made assuming that the memory is a DRAM, but the memory is not limited to the DRAM. That is, the configuration of FIG. 2 may provide an advantage of improving memory access efficiency as long as the memory is such that an access to continuous addresses is performed at high speeds, but the access speed to discontinuous addresses is reduced. The memory may be an SRAM or a non-volatile memory as long as the memory has the above mentioned features. When the memory is layered by a cache system, an efficient memory access without a cache miss may be implemented by using the configuration of FIG. 2.

Further, the above description has been made assuming that the data of a drawing object is expressed as a set of triangles, but the drawing unit may not be a triangle, but may be any polygon form. More specifically, it is apparent that the similar effect as the above described configurations may be obtained by allowing the graphics engine 16 illustrated in FIG. 2 to collectively select the data of spans having the similar Y coordinate value from the data of a plurality of spans having any polygon form as a series of span data.

Hereinbefore, the present invention has been described based on embodiments, but the present invention is not limited to the above embodiments, and various modifications may be made within the scope of the appended claims.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on computer-readable media comprising computer-readable recording media. The program/software implementing the embodiments may also be transmitted over transmission communication media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW. An example of communication media includes a carrier-wave signal.

Further, according to an aspect of the embodiments, any combinations of the described features, functions and/or operations can be provided.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment of the present invention has been described in detail, it should be understood that the various changes, substitutions, and alterations could be made hereto without departing from the invention, the scope of which is defined in the claims.

## Claims

1. A semiconductor device, comprising:
a data acquisition unit which is arranged to acquire first graphic data including a first drawing position in a drawing region, and to acquire second graphic data including a second drawing position different from the first drawing position in the drawing region located later than the first graphic data;
a detector which is arranged to detect positions in a first direction in the drawing region of the first drawing position and the second drawing position; and
a controller which is arranged to cause drawing information at the first drawing position and drawing information at the second drawing position to be continuously stored in a memory when the positions of the first drawing position and the second drawing position in the first direction are similar.

2. A semiconductor device, comprising:
a span selector which is arranged to receive data of a plurality of polygon forms each of which includes data of a plurality of spans each corresponding to each of a plurality of Y coordinate values, and to collectively output data of spans having similar Y coordinate value from the data of spans of the plurality of polygon forms as a series of span data;
a pixel data generator which is arranged to generate data of each pixel for each span of the series of span data outputted by the span selector; and
a memory access unit which is arranged to collectively access addresses of a memory adapted to store the data of each pixel corresponding to the series of span data outputted by the span selector.

3. The semiconductor device according to claim 2, comprising:
a Y-direction digital differential analyzer which is arranged to add a change in the Y direction to data of a span to generate data of a next span for each of the plurality of polygon forms,
wherein the span selector is arranged to use data of the span generated by the Y-direction digital differential analysis unit to sequentially output the series of span data to a plurality of different Y coordinate values.

4. The semiconductor device according to claim 2 or 3, comprising:
a sorter which is arranged to rearrange data of the plurality of polygon forms such that data of each polygon form in the data of the plurality of polygon forms includes a Y coordinate value and the Y coordinate values are arranged in an order of a size thereof, and
wherein the span selector is arranged to output the series of span data based on data of the plurality of polygon forms rearranged by the sorter.

5. The semiconductor device according to claim 2, 3, or 4, wherein the memory access unit is arranged to store each pixel lined up in a direction along the span in a continuous memory address.

6. The semiconductor device according to any of claims 2 to 5, wherein the memory access unit comprises:
a memory reading unit which is arranged to collectively read data of each pixel corresponding to the series of span data outputted by the span selector from the memory; and
a memory writing unit which is arranged to collectively write drawing data in a memory according to the data of each pixel generated by the pixel data generator.

7. The semiconductor device according to any of claims 2 to 6, comprising:
an address calculator which is arranged to calculate a starting memory address and an access length based on the series of span data outputted by the span selector,
wherein the memory access unit is arranged to collectively access a plurality of memory addresses corresponding to the access length from the starting memory address.

8. A graphics controller, comprising:
a memory controller;
a control device which is arranged to write drawing data in an external memory via the memory controller; and
a display controller which is arranged to perform control to read the drawing data from the external memory via the memory controller and to display the drawing data on a display, and
wherein the control device comprises:
a span selector which is arranged to receive data of a plurality of polygon forms each of which includes data of a plurality of spans each corresponding to each of a plurality of Y coordinate values, and to collectively output the data of spans having similar Y coordinate value from the data of spans of the plurality of polygon forms as a series of span data;
a pixel data generator which is arranged to generate data of each pixel for each span of the series of span data outputted by the span selector; and
a memory access unit which is arranged to collectively access addresses of the external memory adapted to store the data of each pixel corresponding to the series of span data outputted by the span selector.

9. The graphics controller according to claim 8, comprising:
a sorter which is arranged to rearrange data of the plurality of polygon forms such that data of each polygon form in the data of the plurality of polygon forms includes a Y coordinate value and the Y coordinate values are arranged in an order of a size thereof,
wherein the span selector is arranged to output the series of span data based on data of the plurality of polygon forms rearranged by the sorter.

10. An information processing method, comprising:
receiving data of a plurality of polygon forms each of which includes data of a plurality of spans each of which corresponds to each of a plurality of Y coordinate values;
collectively selecting data of spans having similar Y coordinate value from the data of spans of the plurality of polygon forms as a series of span data;
generating data of each pixel for each span of the selected series of span data; and
collectively accessing addresses of a memory storing the data of each pixel corresponding to the selected series of span data.

11. The information processing method according to claim 10, comprising:
rearranging data of the plurality of polygon forms such that data of each polygon form in the data of the plurality of polygon forms includes a Y coordinate value and the Y coordinate values are arranged in order of a size thereof,
wherein the series of span data is selected based on data of the plurality of polygon forms rearranged to be lined up in an order of a size of the Y coordinate value.
